# EUROPEAN PATENT APPLICATION

(11) **EP 3 435 451 A1**
(43) Date of publication of application: **30.01.2019**
(21) Application number: 18185576.8
(22) Date of filing: 25.07.2018
(51) Int. Cl.: H01M 4/36, H01M 4/38, H01M 4/587, H01M 10/0525

(54) **METHOD FOR PREPARING COMPOSITE NEGATIVE ELECTRODE MATERIAL FOR LITHIUM ION BATTERY**

(30) Priority: 25.07.2017 CN 201710613431
(71) Applicant: Optimumnano Energy Co., Ltd, Pingshan New District Shenzhen Guangdong 518118 (CN)
(72) Inventor: Jiao, Qi fang, Shenzhen, Guangdong 518118 (CN); Yang, Fan ming, Shenzhen, Guangdong 518118 (CN)
(74) Representative: Greaves Brewster LLP

(57) **Abstract**

The present invention provides a method for preparing a composite negative electrode material for a lithium ion battery. The method uses the p-toluenesulfonamide modified fatty acid as the carbon source, and uses the nitrogen and sulfur element as dopant. The nitrogen/sulfur doped graphitized ordered mesoporous carbon material is prepared after high temperature carbonization, annealing and strong alkali treatment. The nano silicon powder coated with the nitrogen and sulfur doped mesoporous graphite material. The nitrogen and sulfur doped mesoporous graphite material can prevent the silicon from directly contacting the electrolyte, effectively alleviate the large volume expansion of silicon during charge and discharge, maintain the stability of the material structure, prevent the continuous formation of the SEI film, and improve the first discharge efficiency.

## Description

### BACKGROUND OF THE INVENTION

### Field of the Invention

The present invention generally relates to lithium ion batteries and, more particularly, relates to a method for preparing a composite negative electrode material for a lithium ion battery.

### Description of the Related Art

With the wide application of portable electronic devices as well as the rapid development of hybrid vehicles and pure electric vehicles, higher requirements have been put forward to the specific energy and cycle life of lithium ion batteries. The negative electrode material is one of the key factors to evaluate the comprehensive performances of lithium ion batteries.

At present, the most widely used negative electrode material in commercial lithium ion batteries is graphite negative material. The graphite negative material has the advantages of high safety, stable work voltage and long cycle life. However, the theoretical specific capacity of the graphite negative electrode material is only 372 mAh/g. In addition, it is difficult to improve the specific capacity by optimizing the battery preparation process. Therefore, the graphite negative electrode material cannot meet the requirements of high specific energy of lithium ion batteries.

Silicon materials have attracted considerable attention due to high theoretical specific capacity (4200mAh/g), rich reserve, and low lithium intercalation potential (0.2 V). However, as a negative electrode material of lithium ion batteries, silicon material has the following disadvantages: the volume of silicon can be increased by a factor of three in the process of lithium ion deintercalation. Large change in volume causes the electrode structure to be destroyed, and the electrode material falls off from the copper foil, thereby affecting the conductivity and cycle of the electrode. Silicon is a semiconductor, the conductivity of silicon is much worse than that of graphite, which leads to a large degree of irreversibility in the process of lithium ion deintercalation and low first coulomb efficiency.

In view of the foregoing, what is needed, therefore, is to provide a novel method for preparing a composite negative electrode material for a lithium ion battery, which can overcome the disadvantages as discussed above.

### SUMMARY OF THE INVENTION

One object of the present invention is to provide a method for preparing a composite negative electrode material for a lithium ion battery.

According to one embodiment of the present invention, a method for preparing a composite negative electrode material for a lithium ion battery includes the steps of:
step 1): dissolving a certain amount of fatty acid in a solvent comprising at least one of anhydrous ethanol, toluene and acetonitrile to obtain a mixture A; dissolving a certain amount of p-toluenesulfonamide in anhydrous ethanol to obtain a mixture B, mixing mixture A and mixture B evenly; and adding a catalyst or condensing agent to react and obtain a p-tolueneamide modified fatty acid solution after purifying;
step 2): adding concentrated sulfuric acid drop by drop to the p-tolueneamide modified fatty acid solution obtained in step 1) and stirring, adding a mesoporous silicon as template agent, stirring for a period of time to obtain a mixed liquid; placing the mixed liquid in an oven at 85∼100 °C and drying for 1∼2 h to obtain a solid powder, calcining the solid powder in a tube furnace at a high temperature of 200∼300 °C for 6∼8 h under an atmosphere of nitrogen, and taking out of the tube furnace after cooling to obtain a nitrogen/sulfur doped mesoporous carbon material;
step 3): heat treating the nitrogen/sulfur doped mesoporous carbon material obtained in step 2) under an atmosphere of nitrogen for 4∼6 h at 1000∼1200 °C, and obtaining a nitrogen/sulfur doped mesoporous graphite material after cooling to room temperature naturally;
step 4): adding the nitrogen/sulfur doped mesoporous graphite material obtained in step 3) to a alkaline solution to obtain a mixture C, stirring the mixture C at room temperature for 2∼3 h, standing and precipitating the mixture C after fully contacting and reacting, removing supernatant to obtain a precipitate, diluting the precipitate with deionized water and filtering to obtain a filtered product, washing and drying the filtered product to obtain a nitrogen/sulfur doped graphitized ordered mesoporous carbon material;
step 5): dispersing a certain amount of silicon source in dispersing agent water to form a suspension, pouring the suspension into a ball mill tank, stirring the suspension at a rotation speed of 2000∼3000 r/min to obtain a nano silicon dispersion; and
step 6): mixing the nano silicon dispersion obtained in step 5), the nitrogen/sulfur doped graphitized ordered mesoporous carbon material obtained in step 4) and a binder to obtain a mixture D, fully dispersing and spraying drying the mixture D to obtained a dried product, baking the dried product in a tube furnace having argon gas to obtain a final composite negative electrode material for a lithium ion battery

According to one aspect of the present invention, the fatty acid in step 1) is at least one of stearic acid, oleic acid, palmitic acid, and lauric acid.

According to one aspect of the present invention, the alkaline solution in step 4) is a sodium hydroxide solution.

According to one aspect of the present invention, the silicon source in step 5) is silicon simple substance or silicon oxide.

According to one aspect of the present invention, in step 6), a mass content of the mixed nano silicon dispersion is 10%∼15%, a mass content of the nitrogen/sulfur doped graphitized ordered mesoporous carbon material is 55%∼60%, and a mass content of the binder is 25%∼30%.

According to one aspect of the present invention, the binder in step 6) is phenol resin or epoxy resin.

According to one aspect of the present invention, the baking step in step 6) comprising: increasing the temperature to 400 °C∼600 °C at a heat rate of 5 °C∼6 °C/min, maintaining the temperature for 1∼2 h, then increasing the temperature to 900∼1200 °C and maintaining the temperature for 3∼5 h, then decreasing the temperature to 400 °C∼600 °C at a rate of 5 °C∼6 °C/min, maintaining the temperature for 1∼2 h, and cooling to room temperature with the tube furnace.

According to one aspect of the present invention, a mass ratio of the fatty acid and the p-toluenesulfonamide in step 1) is 0.8∼1.5.

According to one aspect of the present invention, a volume ratio of the concentrated sulfuric acid added to the fatty acid in step 2) is 1%∼10%.

According to one aspect of the present invention, a mass ratio of the silicon source to the nitrogen/sulfur doped graphitized ordered mesoporous carbon material in step 5) is 5%∼30%.

Compared with the prior art, the present invention provides a method for preparing a composite negative electrode material for a lithium ion battery, the composite negative electrode material for a lithium ion battery has high electron conductivity and ion mobility, thereby improving the rate performance and cycle performance of the battery.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments by one skilled in the art without departing from the spirit and scope of the described embodiments.
FIG. 1 depicts an X-ray diffraction pattern of a nitrogen/sulfur doped graphitized ordered mesoporous carbon material obtained in step (4) according to Example 1 of the present invention;
FIG. 2 depicts SEM images of a final composite negative electrode material for a lithium ion battery prepared according to Example 1 of the present invention and conventional graphite;
FIG. 3 depicts an X-ray diffraction pattern of a final composite negative electrode material for a lithium ion battery prepared according to Example 1 of the present invention;
FIG. 4 depicts a rate performance curve of a battery A having the composite negative electrode material for a lithium ion battery prepared according to Example 1 of the present invention;
FIG. 5 depicts a rate performance curve of a battery B having a conventional graphite negative electrode; and
FIG. 6 depicts cycle performance curves of the battery A having the composite negative electrode material for a lithium ion battery prepared according to Example 1 of the present invention and the battery B having a conventional graphite negative electrode material.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

According to one embodiment of the present invention, a method for preparing a composite negative electrode material for a lithium ion battery is provided. The method includes the steps of:
step 1): dissolving a certain amount of fatty acid in anhydrous ethanol, dissolving a certain amount of p-toluenesulfonamide in anhydrous ethanol, mixing the two mixture evenly, adding catalyst or condensing agent to react and obtaining a p-tolueneamide modified fatty acid solution after purifying ;
step 2): adding concentrated sulfuric acid drop by drop to the p-tolueneamide modified fatty acid solution obtained in step 1) and stirring, adding a mesoporous silicon as template agent, stirring for a period of time to obtain a mixed liquid; placing the mixed liquid in an oven at 85∼100 °C and drying for 1∼2 h to obtain a solid powder, calcining the solid powder in a tube furnace at a high temperature of 200∼300 °C for 6∼8 h under an atmosphere of nitrogen, and taking out of the tube furnace after cooling to obtain a nitrogen/sulfur doped mesoporous carbon material;
step 3): heat treating the nitrogen/sulfur doped mesoporous carbon material obtained in step 2) under an atmosphere of nitrogen for 4∼6 h at 1000∼1200 °C, and obtaining a nitrogen/sulfur doped mesoporous graphite material after cooling to room temperature naturally;
step 4): adding the nitrogen/sulfur doped mesoporous graphite material obtained in step 3) to a alkaline solution to obtain a mixture C, stirring the mixture C at room temperature for 2∼3 h, standing and precipitating the mixture C after fully contacting and reacting, removing supernatant to obtain a precipitate, diluting the precipitate with deionized water and filtering to obtain a filtered product, washing and drying the filtered product to obtain a nitrogen/sulfur doped graphitized ordered mesoporous carbon material;
step 5): dispersing a certain amount of silicon source in dispersing agent water to form a suspension, pouring the suspension into a ball mill tank, stirring the suspension at a rotation speed of 2000∼3000 r/min to obtain a nano silicon dispersion; and
step 6): mixing the nano silicon dispersion obtained in step 5), the nitrogen/sulfur doped graphitized ordered mesoporous carbon material obtained in step 4) and a binder to obtain a mixture D, fully dispersing and spraying drying the mixture D to obtained a dried product, baking the dried product in a tube furnace having argon gas to obtain a final composite negative electrode material for a lithium ion battery.

Specifically, the fatty acid in step 1) is at least one of stearic acid, oleic acid, palmitic acid, and lauric acid. The alkaline solution in step 4) is a sodium hydroxide solution, the alkaline solution is used to corrode the template. The silicon source in step 5) is silicon simple substance or silicon oxide. In step 6), the mass content of the mixed nano silicon dispersion is 10%∼15%, the mass content of the nitrogen/sulfur doped graphitized ordered mesoporous carbon material is 55%∼60%, and the mass content of the binder is 25%∼30%. The binder in step 6) is phenol resin or epoxy resin.

Specifically, the baking step in step 6) includes: increasing the temperature to 400 °C∼600 °C at a heat rate of 5 °C∼6 °C/min, maintaining the temperature for 1∼2 h, then increasing the temperature to 900∼1200 °C and maintaining the temperature for 3∼5 h, then decreasing the temperature to 400 °C∼600 °C at a rate of 5 °C∼6 °C/min, maintaining the temperature for 1∼2 h, and cooling to room temperature with the tube furnace.

Specifically, a mass ratio of the fatty acid and the p-toluenesulfonamide in step 1) is 0.8-1.5, a volume of the concentrated sulfuric acid added in step 2) to the fatty acid is 1%∼10%. A mass of the silicon source to the nitrogen/sulfur doped graphitized ordered mesoporous carbon material in step 5) is 5%∼30%.

### Example 1

(1) Dissolving 8.0∼9.0 g of oleic acid and 0.6∼0.7 g of p-toluenesulfonamide in anhydrous ethanol, mixing the two in a round bottom flask evenly, adding catalyst or condensing agent to react and then purifying, and obtaining the p-tolueneamide modified oleic acid solution;
(2) adding 0.5∼0.8 g concentrated sulfuric acid drop by drop to the p-tolueneamide modified oleic acid solution obtained in step (1), stirring for 10∼15 min, then adding the mesoporous silicon as template, stirring for a period of time, placing the mixed liquid in an oven at 85∼95 °C and drying for 1.0∼1.5 h, and obtaining a solid powder, placing the solid powder in a tube furnace, under an atmosphere of nitrogen, calcining at a high temperature of 200∼260 °C for 6.0∼7.0 h, cooling and taking out of the tube furnace, and obtaining the nitrogen/sulfur doped mesoporous carbon material;
(3) under an atmosphere of nitrogen, high temperature heat treating the nitrogen/sulfur doped mesoporous carbon material obtained in step (2) for 4.0∼4.5 h at 1000∼1100 °C, cooling to room temperature naturally, and obtaining the nitrogen/sulfur doped mesoporous graphite material;
(4) adding the nitrogen/sulfur doped mesoporous graphite material obtained in step (3) to a sodium hydroxide solution, stirring at room temperature for 2∼2.5 h, fully contacting and reacting, standing and precipitating, removing the supernatant, diluting the precipitate with deionized water and filtering, washing the filtered product and drying, and obtaining the nitrogen/sulfur doped graphitized ordered mesoporous carbon material;
(5) taking 5.0∼8.0 g of micrometer silicon simple substance with water as a dispersing agent to form a suspension, pouring the suspension into a ball mill tank, stirring at a rotation speed of 2000∼3000 r/min for 1∼2 h, and obtaining the nano silicon dispersion;
(6) mixing the nano silicon dispersion obtained in step (5), the nitrogen/sulfur doped graphitized ordered mesoporous carbon material obtained in step (4), and a binder according to a certain mass fraction (10%∼12%:57%∼60%:28%∼30%), fully dispersing and spraying drying, baking the dried product in a tube furnace with argon gas, increasing the temperature to 400 °C∼450 °C at a heat rate of 6 °C/min, maintaining for 2.0 h, then heating to 900∼1000 °C and maintaining for 3.0∼5.0 h, then decreasing the temperature to 500 °C∼550 °C at a rate of 6 °C/min, maintaining for 2.0 h, finally, cooling to room temperature with the tube furnace, and obtaining the final composite negative electrode material for a lithium ion battery.

### Example 2

Dissolving 8.0∼9.5 g of palmitinic acid and 0.6∼0.8 g of p-toluenesulfonamide in anhydrous ethanol, mixing the two in a round bottom flask evenly, adding catalyst or condensing agent to react and then purifying, and obtaining the p-tolueneamide modified palmitinic acid solution;
(2) adding 0.5∼0.7 g concentrated sulfuric acid drop by drop to the p-tolueneamide modified palmitinic acid solution obtained in step (1), stirring for 10∼15 min, then adding the mesoporous silicon as template, stirring for a period of time, placing the mixed liquid in an oven at 85∼95 °C and drying for 1.0∼1.5 h, and obtaining a solid powder, placing the solid powder in a tube furnace, under an atmosphere of nitrogen, calcining at a high temperature of 200∼300 °C for 6∼7 h, cooling and taking out of the tube furnace, and obtaining the nitrogen/sulfur doped mesoporous carbon material;
(3) under an atmosphere of nitrogen, high temperature heat treating the nitrogen/sulfur doped mesoporous carbon material obtained in step (2) for 4∼5 h at a temperature of 1000∼1200 °C, then cooling to room temperature naturally, and obtaining the nitrogen/sulfur doped mesoporous graphite material;
(4) adding the nitrogen/sulfur doped mesoporous graphite material obtained in step (3) to a sodium hydroxide solution, stirring at room temperature for 2∼2.5 h, fully contacting and reacting, standing and precipitating, removing the supernatant, diluting the precipitate with deionized water and filtering, washing the filtered product and drying, and obtaining the nitrogen/sulfur doped graphitized ordered mesoporous carbon material;
(5) taking 6.0∼8.0 g of micrometer silicon simple substance with water as a dispersing agent to form a suspension, pouring the suspension into a ball mill tank, stirring at a rotation speed of 2000∼2800 r/min for 1∼2 h, and obtaining the nano silicon dispersion;
(6) mixing the nano silicon dispersion obtained in step (5), the nitrogen/sulfur doped graphitized ordered mesoporous carbon material obtained in step (4), and a binder according to a certain mass fraction (10%∼15%:55%∼60%:25%∼30%), fully dispersing and spraying drying, baking the dried product in a tube furnace with argon gas, increasing the temperature to 400 °C∼450 °C at a heat rate of 6 °C/min, and maintaining for 2.0 h, then heating to 900∼1000 °C and maintaining for 3∼5 h, then decreasing the temperature to 500 °C∼600 °C at a rate of 6 °C/min, maintaining for 2.0 h, finally, cooling to room temperature with the tube furnace, and obtaining the final composite negative electrode material for a lithium ion battery.

### Example 3

(1) Dissolving 8.5∼9.5 g of lauric acid and 0.6∼0.7 g of p-toluenesulfonamide in anhydrous ethanol, mixing the two in a round bottom flask evenly, adding catalyst or condensing agent to react and then purifying, and obtaining the p-tolueneamide modified lauric acid solution;
(2) adding 0.5∼0.65 g concentrated sulfuric acid drop by drop to the p-tolueneamide modified lauric acid solution obtained in step (1), stirring for 10∼15 min, then adding the mesoporous silicon as template, stirring for a period of time, placing the mixed liquid in an oven at 85∼95 °C and drying for 1.0∼1.5 h, and obtaining a solid powder, placing the solid powder in a tube furnace, under an atmosphere of nitrogen, calcining at a high temperature of 260∼300 °C for 6.0∼6.5 h, cooling and taking out of the tube furnace, and obtaining the nitrogen/sulfur doped mesoporous carbon material;
(3) under an atmosphere of nitrogen, high temperature heat treating the nitrogen/sulfur doped mesoporous carbon material obtained in step (2) for 4.0∼4.5 h at a temperature of 1000∼1100 °C, cooling to room temperature naturally, and obtaining the nitrogen/sulfur doped mesoporous graphite material;
(4) adding the nitrogen/sulfur doped mesoporous graphite material obtained in step (3) to a sodium hydroxide solution, stirring at room temperature for 2∼2.5 h, fully contacting and reacting, standing and precipitating, removing the supernatant, diluting the precipitate with deionized water and filtering, washing the filtered product and drying, and obtaining a nitrogen/sulfur doped graphitized ordered mesoporous carbon material;
(5) taking 6.0∼7.5 g of micrometer silicon simple substance with water as a dispersing agent to form a suspension, pouring the suspension into a ball mill tank, stirring at a rotation speed of 2000∼2600 r/min for 1.5∼2.0 h, and obtaining the nano silicon dispersion;
(6) mixing the nano silicon dispersion obtained in step (5), the nitrogen/sulfur doped graphitized ordered mesoporous carbon material obtained in step (4), and a binder according to a certain mass fraction (10%∼15%:58%∼60%:22%∼30%), fully dispersing and spraying drying, baking the dried product in a tube furnace with argon gas, increasing the temperature to 450 °C∼550 °C at a heat rate of 6.0 °C/min, maintaining for 2.0 h, then heating to 900∼1200 °C and maintaining for 3∼4 h, then decreasing the temperature to 550 °C∼600 °C at a rate of 6 °C/min, maintaining for 2 h, finally, cooling to room temperature with the tube furnace, and obtaining the final composite negative electrode material for a lithium ion battery.

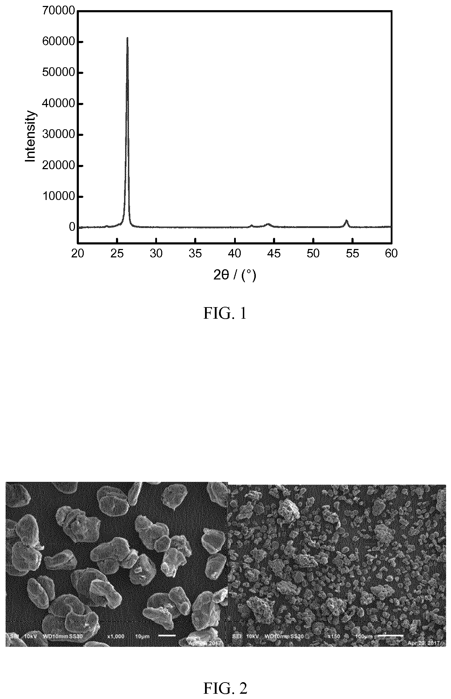

FIG. 1 depicts an X-ray diffraction pattern of the nitrogen/sulfur doped graphitized ordered mesoporous carbon material obtained in step (4) according to Example 1 of the present invention; wherein θ is a diffraction angle. As shown in FIG. 1, the material obtained in Example 1 has a sharp diffraction peak at about 2θ=26°, and the peak intensity is high, corresponding to the graphite (002) crystal plane, and the crystallinity is high. At the same time, there has an obvious graphitized characteristic peak at about 2θ=42°, indicating that the p-tolueneamide modified oleic acid is used as a carbon source, the graphitization degree of the nitrogen and sulfur doped ordered mesoporous carbon material is higher, which is beneficial to release lithium ions.

FIG. 2 depicts SEM images of the final composite negative electrode material for a lithium ion battery prepared according to Example 1 of the present invention and conventional graphite. As shown in FIG. 2, the composite negative electrode material for a lithium ion battery prepared according to Example 1 of the present invention has a smooth surface, a single shape, a regular spherical shape, and the particle size is uniform. After coating the silicon material with the nitrogen and sulfur doped graphitized mesoporous carbon, the electron cloud density of the carbon material itself is increased, and the electronic conductivity of the material is improved. The graphitized carbon is doped with sulfur, the surface properties can be improved, the compatibility of the carbon material and the electrolyte is improved, the large volume expansion of silicon can be alleviated during charge and discharge, which can maintain the stability of the material structure, prevent the continuous formation of SEI film, and improve the first discharge efficiency. The appearance of the material is spherical, the anisotropy of the graphite structure is reduced, the rate performance is increased, the active sites of the surface is reduced, the side reactions between the material surface and the electrolyte are reduced, the wettability and matching degree of the material and the electrolyte is improved, and the cycle performance of the battery is improved.

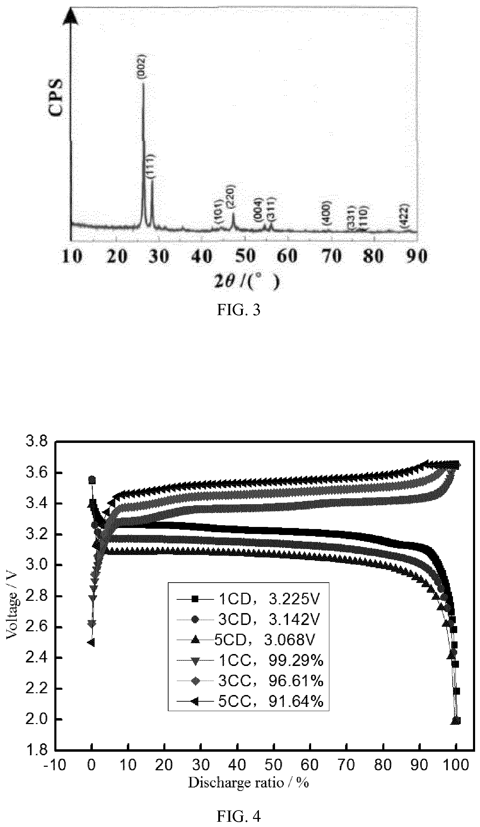

FIG. 3 depicts an X-ray diffraction pattern of the final composite negative electrode material for a lithium ion battery prepared according to Example 1 of the present invention. As shown in FIG. 3, the diffraction peak of silicon appears at 2θ of 28.54°, 47.29°, 56.13°, etc., and the diffraction peak of graphite appears at 2θ of 26.50°, 44.56°, 54.55°, etc., indicating that the silicon and graphite were composited by physical methods, and no new chemical phase was formed in the composite process. In addition, there is no diffraction peak of carbon in FIG. 3, indicating that the carbon coated on the surface is amorphous state.

### Preparation of the negative electrode plate and assembly and testing of batteries

The composite negative electrode material for a lithium ion battery prepared according to Example 1 of the present invention is used as an active material and the conventional graphite as a negative electrode material, contrast to a conventional negative electrode process, mixing the composite negative electrode material of Example 1 with one or more of superconducting carbon black, carbon nanotubes, and conductive graphite conductive agent evenly, using deionized water as solvent, using CMC and SBR as binders to prepare negative electrode slurry; positive electrode active materials are all lithium iron phosphate; after coating and rolling the positive and negative electrode slurries, obtaining the positive electrode and the negative electrode plates by slitting. The positive electrode and the negative electrode use a winding structure to prepare a lithium ion battery A corresponding to Example 1 of the present invention and a lithium ion battery B corresponding to the conventional graphite negative electrode material.

The rate and cycle performance of lithium ion battery A and lithium ion battery B are tested. The range of charge and discharge cut-off voltage is 2.0∼3.65 V.

Table 1 is a comparison table of basic parameters of the lithium ion battery A having the composite negative electrode material for a lithium ion battery prepared according to Example 1 of the present invention and the lithium ion battery B having a conventional graphite negative electrode.

**Table 1**

| Battery | Compacted density (g/cm³) | Gram capacity of the positive electrode (mAh/g) | Internal resistance (mΩ) | Capacity (mAh) | Mass (g) | Energy density (Wh/Kg) |
|---|---|---|---|---|---|---|
| Lithium ion battery A | 1.60 | 435 | 6.3 | 6329 | 131.2 | 154.4 |
| Lithium ion battery B | 1.60 | 340 | 7.9 | 6095 | 138.6 | 140.7 |

It is clearly shown in Table 1 that, the lithium ion battery A and the lithium ion battery B adopt the same compaction density, The internal resistance of the battery A prepared by using the composite negative electrode material is small. The graphite in the negative electrode of battery A is doped with nitrogen and sulfur atoms, which increases the electron cloud density of the graphite portion, improves the conductivity of the material, thereby being beneficial to reduce the ohmic resistance of the material. The capacity of the battery A is larger than the capacity of the battery B, because the composite negative electrode material for a lithium ion battery prepared according to Example 1 of the present invention has a single surface topography, i.e. a regular spherical shape. The active sites on the surface are reduced, the side reactions between the material surface and the electrolyte are reduced, the loss of irreversible active lithium is reduced, which is beneficial to exert the gram capacity of the positive electrode. To the same system, the quantity of the negative electrode material used is reduced, the weight of the battery is reduced, and the energy density of the battery A can be increased.

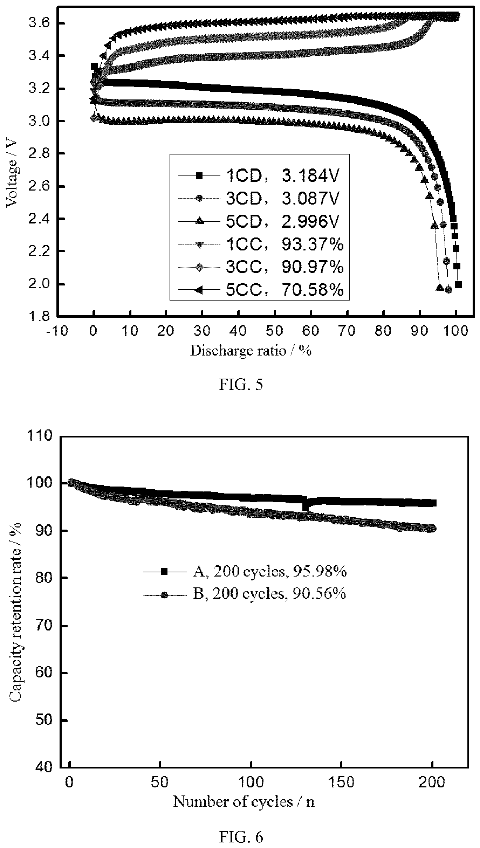

FIG. 4 depicts a graph showing the rate performance of the battery A having the composite negative electrode material for a lithium ion battery prepared according to Example 1 of the present invention; FIG. 5 depicts a graph showing the rate performance of the battery B having a conventional graphite negative electrode.

As shown in FIG. 4 and FIG. 5, the rate performance of battery A having the composite negative electrode material for a lithium ion battery prepared according to Example 1 of the present invention is much better than that of battery B having the conventional graphite negative electrode. The charge constant current ratio of battery A at 1C/3C/5C is 99.29%, 96.61%, and 91.64%, respectively, and the charge constant current ratio of battery B at 1C/3C/5C is 93.37%, 90.97%, and 70.58%, respectively. Because the graphite of the composite negative electrode material for a lithium ion battery in battery A is doped with nitrogen and sulfur atoms, the electron cloud density of the graphite portion is increased, the conductivity of the material is improved, the internal resistance of the battery is reduced, and the graphite is an ordered mesoporous material, which provides sufficient path for the transmission of the lithium ion and electron conduction. The spherical morphology structure can also provide advantages for ion transmission.

FIG. 6 depicts a comparative graph of the cycle performance of battery A having the composite negative electrode material for a lithium ion battery prepared according to Example 1 of the present invention and the cycle performance of battery B having conventional graphite negative electrode. As can be seen from FIG. 6, the capacity retention rate of battery A having the composite negative electrode material for a lithium ion battery prepared according to Example 1 of the present invention after 200 cycles at normal temperature was 95.98%, while the capacity retention rate of battery B having conventional graphite negative electrode after 200 cycles at normal temperature was 90.56%. The cycle performance of battery A is superior to the cycle performance of battery B. The composite negative electrode material for a lithium ion battery prepared according to Example 1 of the present invention is coated with nitrogen and sulfur doped graphitized mesoporous carbon, the lone pair electrons on the nitrogen can increase the electron cloud density and electron conductivity of the material body. The surface properties can be improved by sulfur doped graphitized carbon, which can improve the compatibility of the carbon material and the electrolyte as well as improve the wettability of the electrolyte and the negative electrode. The diameter of the outer graphitized carbon material has a uniformly ordered mesoporous structure. The nano silica powder is coated with the improved graphite, which can effectively alleviate the large volume expansion of the silicon during charge and discharge process, maintain the stability of the material structure, prevent the continuous formation of the SEI film, and improve the first discharge efficiency. In addition, the composite negative electrode material for a lithium ion battery prepared according to Example 1 of the present invention has a single surface topography, i.e. a regular spherical shape, which can reduce the active sites on the surface, reduce the side reactions between the material surface and the electrolyte, reduce the loss of irreversible active lithium, and improve the cycle life of the battery.

The method for preparing a composite negative electrode material for a lithium ion battery of the present invention, uses the p-toluenesulfonamide modified fatty acid as the carbon source, and uses the nitrogen and sulfur element as dopant. After high temperature carbonization, annealing and strong alkali treatment, the nitrogen/sulfur doped graphitized ordered mesoporous carbon materials are prepared. The diameter is orderly and uniform, which is beneficial to the migration and transport of the lithium ions within the material. After doping with the nitrogen and sulfur, the lone pair of electrons on the nitrogen atom can increase the electron density and electronic conductivity of the battery material. Doping with the sulfur element can change the interface properties of the carbon material, and enhance the compatibility and wettability between the material and the electrolyte. After coating the nano silicon powder with the nitrogen and sulfur doped mesoporous graphite material, the nitrogen and sulfur doped mesoporous graphite material can prevent the silicon from directly contacting the electrolyte, effectively alleviate the large volume expansion of silicon during charge and discharge, maintain the stability of the material structure, prevent the continuous formation of the SEI film, and improve the first discharge efficiency.

The present invention provides a method for preparing a composite negative electrode material for a lithium ion battery. The composite negative electrode material for a lithium ion battery has high electron conductivity and ion mobility, thereby improving the rate performance and cycle performance of the battery.

It will be apparent to those skilled in the art that various modification and variations can be made in the multicolor illumination device and related method of the present invention without departing from the SPI 16rit or scope of the invention. Thus, it is intended that the present invention cover modifications and variations that come within the scope of the appended claims and their equivalents.

## Claims

1. A method for preparing a composite negative electrode material for a lithium ion battery, comprising the steps of:
step 1): dissolving a certain amount of fatty acid in a solvent comprising at least one of anhydrous ethanol, toluene and acetonitrile to obtain a mixture A; dissolving a certain amount of p-toluenesulfonamide in anhydrous ethanol to obtain a mixture B, mixing mixture A and mixture B evenly; and adding a catalyst or condensing agent to react and obtain a p-tolueneamide modified fatty acid solution after purifying;
step 2): adding concentrated sulfuric acid drop by drop to the p-tolueneamide modified fatty acid solution obtained in step 1) and stirring, adding a mesoporous silicon as template agent, stirring for a period of time to obtain a mixed liquid; placing the mixed liquid in an oven at 85∼100 °C and drying for 1∼2 h to obtain a solid powder, calcining the solid powder in a tube furnace at a high temperature of 200∼300 °C for 6∼8 h under an atmosphere of nitrogen, and taking out of the tube furnace after cooling to obtain a nitrogen/sulfur doped mesoporous carbon material;
step 3): heat treating the nitrogen/sulfur doped mesoporous carbon material obtained in step 2) under an atmosphere of nitrogen for 4∼6 h at 1000∼1200 °C, and obtaining a nitrogen/sulfur doped mesoporous graphite material after cooling to room temperature naturally;
step 4): adding the nitrogen/sulfur doped mesoporous graphite material obtained in step 3) to a alkaline solution to obtain a mixture C, stirring the mixture C at room temperature for 2∼3 h, standing and precipitating the mixture C after fully contacting and reacting, removing supernatant to obtain a precipitate, diluting the precipitate with deionized water and filtering to obtain a filtered product, washing and drying the filtered product to obtain a nitrogen/sulfur doped graphitized ordered mesoporous carbon material;
step 5): dispersing a certain amount of silicon source in dispersing agent water to form a suspension, pouring the suspension into a ball mill tank, stirring the suspension at a rotation speed of 2000∼3000 r/min to obtain a nano silicon dispersion; and
step 6): mixing the nano silicon dispersion obtained in step 5), the nitrogen/sulfur doped graphitized ordered mesoporous carbon material obtained in step 4) and a binder to obtain a mixture D, fully dispersing and spraying drying the mixture D to obtained a dried product, baking the dried product in a tube furnace having argon gas to obtain a final composite negative electrode material for a lithium ion battery.

2. The method of claim 1, wherein the fatty acid in step 1) is at least one of stearic acid, oleic acid, palmitic acid, and lauric acid.

3. The method of claim 2, wherein the alkaline solution in step 4) is a sodium hydroxide solution.

4. The method of claim 3, wherein the silicon source in step 5) is silicon simple substance or silicon oxide.

5. The method of claim 4, wherein in step 6), a mass content of the mixed nano silicon dispersion is 10%∼15%, a mass content of the nitrogen/sulfur doped graphitized ordered mesoporous carbon material is 55%∼60%, and a mass content of the binder is 25%∼30%.

6. The method of claim 5, wherein the binder in step 6) is phenol resin or epoxy resin.

7. The method of claim 6, wherein the baking step in step 6) comprising: increasing the temperature to 400 °C∼600 °C at a heat rate of 5 °C∼6 °C/min, maintaining the temperature for 1∼2 h, then increasing the temperature to 900∼1200 °C and maintaining the temperature for 3∼5 h, then decreasing the temperature to 400 °C∼600 °C at a rate of 5 °C∼6 °C/min, maintaining the temperature for 1∼2 h, and cooling to room temperature with the tube furnace.

8. The method of claim 7, wherein a mass ratio of the fatty acid and the p-toluenesulfonamide in step 1) is 0.8∼1.5.

9. The method of claim 8, wherein a volume ratio of the concentrated sulfuric acid added to the fatty acid in step 2) is 1%∼10%.

10. The method of claim 9, wherein a mass ratio of the silicon source to the nitrogen/sulfur doped graphitized ordered mesoporous carbon material in step 5) is 5%∼30%.
